# EUROPÄISCHE PATENTSCHRIFT

(11) **EP 2 718 739 B1**
(45) Veröffentlichungstag und Bekanntmachung des Hinweises auf die Patenterteilung: **29.06.2016**
(21) Anmeldenummer: 12716314.5
(22) Anmeldetag: 10.04.2012
(51) Int. Cl.: G01S 7/02, G01S 13/93, G01S 7/40

(54) **SENSORHALTERUNG FÜR EINEN SENSOR ZUR OBJEKTDETEKTION**
SENSOR MOUNTING FOR A SENSOR FOR OBJECT DETECTION
SUPPORT DE CAPTEUR POUR UN CAPTEUR SERVANT À DÉTECTER DES OBJETS

(30) Priorität: 09.06.2011 DE 102011077255
(43) Veröffentlichungstag der Anmeldung: 16.04.2014
(73) Patentinhaber: Robert Bosch GmbH, 70442 Stuttgart (DE)
(72) Erfinder: ZELLER, Gerald, 71636 Ludwigsburg (DE); BUSCH, Andreas, 30880 Laatzen (DE)
(86) Internationale Anmeldenummer: PCT/EP2012/056410
(87) Internationale Veröffentlichungsnummer: WO 2012/167969

(56) Entgegenhaltungen:
- EP-A1- 1 480 055
- DE-A1- 3 309 685
- DE-A1- 10 025 501
- DE-A1- 19 924 056
- DE-A1-102008 045 763
- US-A1- 2004 017 308
- US-B1- 6 714 156

## Beschreibung

Die Erfindung betrifft eine Sensorhalterung für einen Sensor zur Objektdetektion, insbesondere für einen Radarsensor. Insbesondere betrifft die Erfindung eine Sensorhalterung für einen Sensor zur Objektdetektion für Kraftfahrzeuge, insbesondere für Fahrassistenzsysteme. Weiter betrifft die Erfindung eine Sensoreinheit mit einer Sensorhalterung sowie einen Bausatz für eine Sensorhalterung.

### STAND DER TECHNIK

Radarsensoren werden in Kraftfahrzeugen zur Abstands- und/oder Geschwindigkeitsmessung von Objekten verwendet. Es sind beispielsweise Fahrassistenzsysteme in Form von Fahrgeschwindigkeitsreglern für Kraftfahrzeuge mit einem Radarsystem zur Ortung eines vorausfahrenden Fahrzeuges und zur Messung des Abstandes zu diesem bekannt. Ein solches Abstandsregelsystem wird auch als ACC-System (Adaptive Cruise Control) bezeichnet.

Um die ordnungsgemäße Funktion von Radarsensoren zu gewährleisten, müssen diese beispielsweise nach einem Montieren im Fahrzeug innerhalb vorgegebener Grenzen zur Fahrbahn bzw. dem gewünschten Erfassungsbereich ausgerichtet werden. Beispielsweise ist für einen Radarsensor für ein System zur adaptiven Fahrgeschwindigkeitsregelung üblicherweise eine Ausrichtung einer Hauptstrahlungsrichtung des Radarsensors in einem genau definierten Winkel zur Fahrzeuglängsachse erforderlich, beispielsweise parallel zur Fahrzeuglängsachse. Durch eine solche Ausrichtung können beispielsweise herstellungsbedingte Toleranzen der mechanischen Komponenten des Radarsensors sowie Toleranzen der Befestigung am Kraftfahrzeug ausgeglichen werden.

Für einen Radarsensor zur Objektdetektion ist insbesondere eine Ausrichtung oder Justierung eines Neigungswinkels einer Hauptstrahlungsrichtung des Radarsensors wichtig. Dieser Winkel wird auch als Elevation bezeichnet.

Es sind Justagevorrichtungen zur Justage eines Radarsensors in vertikaler Richtung, d.h. bezüglich des Elevationswinkels, bekannt, bei denen mittels einer Justierschraube der Neigungswinkel des Radarsensors verändert werden kann.

DE 10 2008 045 763 A1, das zur Abgrenzung nach der zweiteiligen Form verwendet wird, beschreibt einen Radarsensor mit einem Gehäuse, das mittels einer Halterung verdeckt an einem Kraftfahrzeug befestigbar ist, wobei eine Ausrichtung des Gehäuses relativ zu der Halterung mittels zwei Einstellschrauben justierbar ist. Jede der Einstellschrauben ist mittels eines Kegelradgetriebes antreibbar. Die Ein-stellschraube ist jeweils in einer Öffnung der Halterung geführt und über einen koaxial verschiebbaren Vierkantstab drehfest mit einem Abtriebsrad des Kegelradgetriebes verbunden. Ein Antriebsrad des Kegelradgetriebes ist in einer entsprechend geformten Aussparung der Halterung drehbar befestigt.

DE 199 24 056 A1 und DE 100 25 501 A1 beschreiben eine Halterung, die über Schrauben an einem Gehäuse eines Radarsensors befestigt ist. Durch Drehen der Schrauben ist das Gehäuse gegenüber der Halterung bewegbar und damit justierbar. Die Justierschrauben sind drehbar an der Halterung gelagert und mit einem Kegelrad versehen. Ein Antrieb des Kegelrades erfolgt über ein zweites Kegelrad, das fest mit einer an der Halterung gelagerten Drehspindel verbunden ist.

### OFFENBARUNG DER ERFINDUNG

Bei bekannten Justiervorrichtungen für Kraftfahrzeug-Radarsensoren, bei denen eine Justierung über eine Drehbewegung einer Justierschraube erfolgt, muss diese Schraube am Einbauort im Kraftfahrzeug zur Justierung zugänglich sein. Dies muss bei der Konstruktion des Radarsensors und/oder beim Entwerfen der Einbauumgebung entsprechend vorgesehen werden. Für unterschiedliche Einbausituationen können daher Neukonstruktionen eines Radarsensors oder dessen Haltevorrichtung erforderlich sein. Aufgabe der Erfindung ist es, eine Sensorhalterung mit einer Justiereinrichtung für einem Sensor zur Objektdetektion zu schaffen, die unterschiedliche Justagekonzepte ermöglicht.

Die Aufgabe wird gelöst durch eine Sensorhalterung für einen Sensor zur Objektdetektion, mit einem Gehäuse für den Sensor, einem Halter, an dem das Gehäuse verschwenkbar gehalten ist, einer Justiereinrichtung für eine Winkelausrichtung des Gehäuses und einem Winkelgetriebe zum Steuern der Justiereinrichtung, wobei das Winkelgetriebe ein Antriebsrad und ein Abtriebsrad aufweist, wobei das Antriebsrad mit einer Eingriffskontur zur Drehmomentübertragung auf das Antriebsrad verbunden ist und wobei ein Getriebegehäuse des Winkelgetriebes dazu eingerichtet ist, eine Montage des Antriebsrades an unterschiedlichen Seiten des Winkelgetriebes zu gestatten.

Dadurch kann in einer Einbausituation mit vorgegebener Orientierung des Sensorgehäuses einfach durch Montage des Antriebsrades an einer der unterschiedlichen Seiten die Justiermöglichkeit an der entsprechenden Seite vorgesehen werden. Ein besonderer Vorteil dieses Justagekonzeptes ist es, dass ohne konstruktive Änderungen der Bauteile der Sensorhalterung eine Justierung des Sensors an einer gewünschten Seite vorgesehen werden kann.

Vorzugsweise ist das Antriebsrad an mehreren, winkelversetzten Positionen am Umfang des Abtriebsrades montierbar. So kann insbesondere bei einem Winkelgetriebe mit Antriebsrad und Abtriebsrad auf besonders einfache Weise eine Montage des Antriebsrades an verschiedenen Umfangspositionen des Abtriebsrades vorgesehen sein.

Insbesondere kann das Getriebegehäuse eine Montage des Antriebsrades an unterschiedlichen Seiten des Winkelgetriebes in einer jeweiligen Stellung gestatten, in welcher das Antriebsrad in Eingriff mit dem Abtriebsrad steht und die Eingriffskontur an eine Außenseite des Getriebegehäuses angeordnet ist. Dadurch kann die Eingriffskontur an der entsprechenden Seite zugänglich angeordnet werden.

Vorzugsweise weist das Getriebegehäuse einen ersten Gehäuseteil und einen zweiten Gehäuseteil auf, und das Antriebsrad ist zwischen dem ersten Gehäuseteil und dem zweiten Gehäuseteil angeordnet. Dadurch kann beispielsweise auf besonders einfache Weise bei der Montage des Getriebegehäuses das Antriebsrad an der gewünschten Seite angeordnet werden. Der zweite Gehäuseteil ist beispielsweise über den ersten Gehäuseteil mit dem Halter verbunden. Der erste Gehäuseteil ist beispielsweise mit dem Halter verbunden.

Vorzugsweise bildet das Getriebegehäuse ein Lager für das Antriebsrad, besonders bevorzugt ein Gleitlager. Beispielsweise kann der erste Gehäuseteil und/oder der zweite Gehäuseteil wenigstens eine Aufnahme zur Lagerung des Antriebsrades aufweisen.

Vorzugsweise weist das zweite Gehäuseteil eine Aufnahme zur Lagerung des Antriebsrades auf, und das Getriebegehäuse ist dazu eingerichtet, eine Montage des zweiten Gehäuseteils mit an unterschiedlichen Seiten des Winkelgetriebes positionierter Aufnahme zu gestatten. Beispielsweise kann das zweite Gehäuseteil in verschiedenen Stellungen an dem ersten Gehäuseteil montierbar sein, in denen die Aufnahme an jeweiligen unterschiedlichen Seiten des Winkelgetriebes positioniert ist. So kann beispielsweise der erste Gehäuseteil in vorgegebener Stellung zum Halter angeordnet sein, während beispielsweise der zweite Gehäuseteil eine Anpassung des Getriebegehäuses an die unterschiedlichen Montagepositionen des Antriebsrades gestattet. Vorzugsweise ist das Winkelgetriebe ein Kegelradgetriebe. Besonders bevorzugt sind das Antriebsrad und das Abtriebsrad verzahnte Kegelräder. Dadurch kann eine besonders genaue Drehmomentübertragung erfolgen.

In einer bevorzugten Ausführungsform weist die Justiereinrichtung eine drehbare, durch das Winkelgetriebe steuerbare Scheibe mit spiralförmig verlaufender Führungskulisse auf, in die ein radial bewegbarer Zapfen eingreift. Dies ermöglicht eine große Untersetzung sowie eine Selbsthemmung der Justiereinrichtung. Besonders vorteilhaft ist außerdem, dass auf kleinstem Raum eine Umsetzung der Drehbewegung des Abtriebsrades in eine radiale Bewegung des Zapfens erfolgen kann. Beispielsweise wirkt der Zapfen mit der Führungskulisse derart zusammen, dass bei einer Durch Drehung der Scheibe erzwungenen Relativbewegung zwischen Scheibe und Zapfen der Zapfen in radialer Richtung gesteuert wird.

Die Scheibe kann beispielsweise mit dem Abtriebsrad verbunden sein, insbesondere einstückig verbunden sein. Beispielsweise kann eine erste Seite der Scheibe die Führungskulisse aufweisen und eine zweite Seite der Scheibe das Abtriebsrad bilden.

Der Zapfen ist vorzugsweise mit dem Gehäuse gekoppelt. Beispielsweise ist der Zapfen an dem Gehäuse angeordnet. Beispielsweise kann der Zapfen fest mit dem Gehäuse verbunden sein.

Weiter wird die Aufgabe gelöst durch einen Bausatz für eine Sensorhalterung der beschriebenen Art, bei dem das Antriebsrad an unterschiedlichen Seiten des Winkelgetriebes montierbar ist. Insbesondere ist vorzugsweise das Antriebsrad an unterschiedlichen Seiten des Winkelgetriebes in einer jeweiligen Stellung montierbar, in welcher es in Eingriff mit dem Abtriebsrad steht und die Eingriffskontur an einer Außenseite des Getriebegehäuses angeordnet ist. Der Bausatz kann beispielsweise das Antriebsrad und das oben genannte zweite Gehäuseteil umfassen, wobei das Antriebsrad zwischen einem ersten Gehäuseteil und dem zweiten Gehäuseteil des Getriebegehäuses montierbar ist.

### KURZE BESCHREIBUNG DER ZEICHNUNGEN

Ein bevorzugtes Ausführungsbeispiel der Erfindung wird im folgenden anhand der Zeichnung näher erläutert.

Es zeigen:
- Fig. 1: eine schematische Darstellung einer Vorderansicht eines Radarsensors mit einer erfindungsgemäßen Sensorhalterung;
- Fig. 2: eine Querschnittsansicht einer Führungskulisse und eines Zapfens einer Justiereinrichtung der Sensorhalterung; und
- Fig. 3: eine schematische Ansicht von ersten und zweiten Gehäuseteilen und eines Antriebsrades eines Winkelgetriebes der Sensorhalterung.

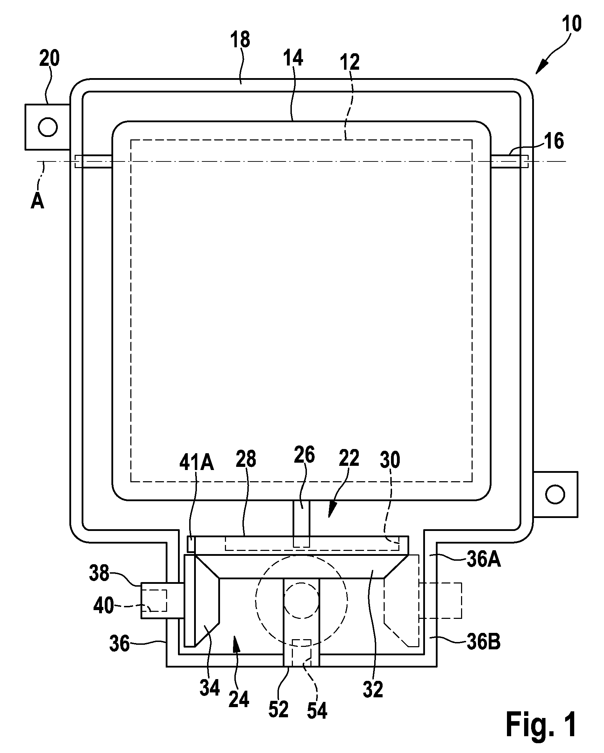

Fig. 1 zeigt eine Sensoreinheit mit einer Sensorhalterung 10 und einem Radarsensor 12, der ein Gehäuse 14 aufweist. Bei dem Radarsensor 12 handelt es sich um einen Radarsensor für ein Fahrerassistenzsystem eines Kraftfahrzeugs, insbesondere für einen Fahrgeschwindigkeitsregler.

Das Sensorgehäuse 14 ist mittels Stiften 16 schwenkbar an einem Halter 18 der Sensorhalterung 10 aufgehängt. Der Halter 18 bildet einen um das Gehäuse 14 herum verlaufenden Rahmen. Der Rahmen hat Seitenteile, die oberhalb und/oder unterhalb des Gehäuses miteinander verbunden sind, und an welchen das Sensorgehäuse 14 aufgehängt ist. In der Vorderansicht in Fig. 1 verläuft die Hauptstrahlungsrichtung des Radarsensors 12 aus der Zeichenebene hinaus. Das Gehäuse 14 ist um eine quer verlaufende, horizontale Achse A schwenkbar. Am Einbauort in einem Kraftfahrzeug wird die Sensorhalterung an dem Kraftfahrzeug montiert, indem der Halter 18 am Kraftfahrzeug befestigt wird, beispielsweise mittels am Halter 18 geordneten Befestigungseinrichtungen 20 in Form von Befestigungslaschen.

Bei einem Verschwenken des im Gehäuse 14 angeordneten Radarsensors 12 um die Schwenkachse A ändert sich der Neigungswinkel der Hauptstrahlungsrichtung des Radarsensors bezüglich der Horizontalen. Zur Justierung dieser Winkelausrichtung umfasst die Sensorhalterung 10 eine Justiereinrichtung 22, die über ein Winkelgetriebe 24 gesteuert wird.

Die Justiereinrichtung 22 umfasst einen Zapfen 26, der an einer Seite des Gehäuses 14 vom Gehäuse 14 absteht und fest mit diesem verbunden ist. Der Zapfen 26 ragt in einer Richtung vor, die quer zur Schwenkachse A des Gehäuses 14 und quer zur Hauptstrahlungsrichtung des Radarsensors 12 ist. Der Zapfen 26 ist in vertikaler Richtung beabstandet von der Schwenkachse A.

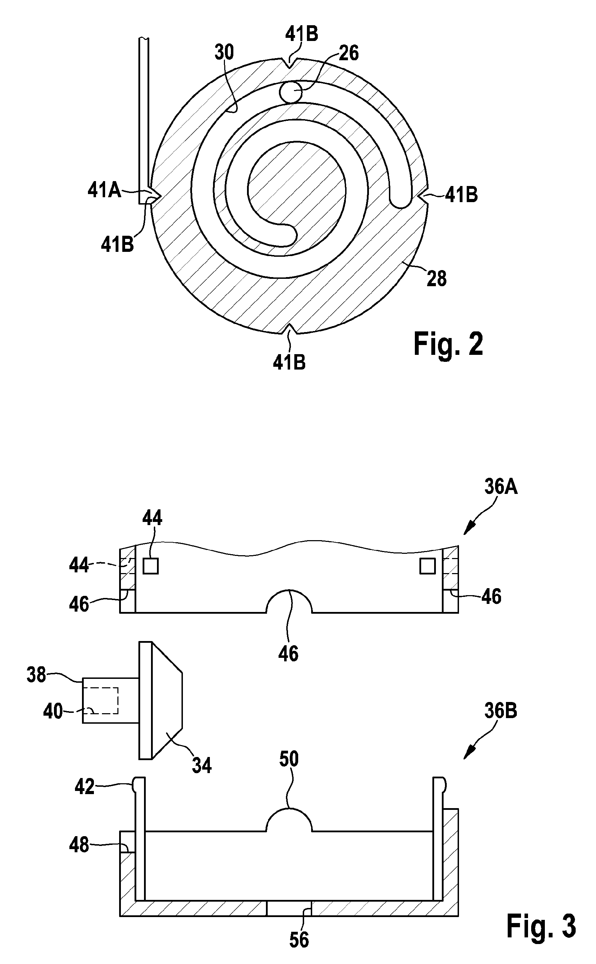

Die Justiereinrichtung 22 umfasst weiter eine drehbar gelagerte Scheibe 28, die um eine quer zur Hauptstrahlungsrichtung des Radarsensors 12 und zur Schwenkachse A des Gehäuses 14 verlaufende Drehachse drehbar ist. An einer dem Zapfen 26 zugewandten Seite hat die Scheibe 28 eine spiralförmig verlaufende Führungskulisse 30 für den Zapfen 26, wie in Fig. 2 schematisch dargestellt ist. Der Zapfen 26 greift spielfrei in die Führungskulisse 30 ein. Bei stillstehender Scheibe 28 ist dadurch die Stellung des Zapfens 26 festgelegt, so dass die Winkelausrichtung des Gehäuses 14 um seine Schwenkachse festgelegt ist und somit die Hauptstrahlungsrichtung des Radarsensors 12 eine bestimmte Winkelposition in Bezug auf die Horizontale hat. Wird die Scheibe 28 in eine andere Stellung gedreht, so gelangt der in der Führungskulisse 30 geführte Zapfen 26 in eine andere radiale Position bezüglich der Scheibe 28 und verschwenkt dabei das Gehäuse 14 um dessen Schwenkachse. Denn der Zapfen 26 ist aufgrund der Aufhängung des Gehäuses 14 am Halter 18 lediglich in radialer Richtung bezüglich der Scheibe 28 bewegbar.

Der Zapfen 26 wirkt somit derart mit der Führungskulisse 30 zusammen, dass bei einer durch Drehung der Scheibe 28 erzwungenen Relativbewegung zwischen der Scheibe 28 und dem Zapfen 26 der Zapfen 26 in radialer Richtung gesteuert wird und das Gehäuse 14 um seine Schwenkachse verschwenkt wird. Der Zapfen 26, die Führungskulisse 30 und die Aufhängung des Gehäuses 14 am Halter 18 bilden somit einen Mechanismus zum Umsetzen einer Rotationsbewegung der Scheibe 28 in eine Schwenkbewegung des Gehäuses 14 um eine horizontale Schwenkachse. Durch den spiralförmigen Verlauf der Führungskulisse 30 ergibt sich dabei eine starke Untersetzung sowie eine Selbsthemmung der Justiereinrichtung. Dies ermöglicht eine feine Justierung der Neigung der Hauptstrahlungsrichtung des Radarsensors 12.

Auf der den Zapfen 26 abgewandten Seite bildet die Scheibe 28 ein Zahnrad in Form eines Kegelrades des Winkelgetriebes 24. Das Kegelrad stellt ein Abtriebsrad 32 des Winkelgetriebes 24 dar. Das Abtriebsrad 32 wirkt zusammen mit einem zweiten Kegelrad, welches ein Antriebsrad 34 des Winkelgetriebes 24 bildet. Die miteinander verzahnten Antriebs- und Abbtriebsräder 34, 32 haben unter einem Winkel von 90° zueinanderstehende Achsen. Der Durchmesser des Abtriebsrades 32 ist größer als der Durchmesser des Antriebsrades 34, so dass sich eine weitere Untersetzung ergibt. Das Antriebsrad 34 ist drehbar an einer Seitenwand eines Getriebegehäuses 36 gelagert.

Ein Achszapfen 38 des Antriebsrades 34 weist eine Eingriffskontur 40 zur unmittelbaren Drehmomentübertragung auf das Antriebsrad 34 auf. Die Eingriffskontur 40 liegt an einer Seite des Getriebegehäuses 36 frei. Die Eingriffskontur 40 ist beispielsweise ein Steckansatz für einen Schraubendreher oder Schraubenschlüssel. Beispielsweise umfasst die Eingriffskontur 40 ein Innen-Sechskantprofil.

Das Abtriebsrad 32 ist ebenfalls drehbar an dem Getriebegehäuse 36 gelagert. Das Antriebsrad 34 und das Abtriebsrad 32 sind miteinander verzahnt und bilden ein spielfreies Zahnradgetriebe in Form eines Kegelradgetriebes.

Indem beispielsweise mittels eines Schraubendrehers das Antriebsrad 34 gedreht wird, wird zugleich das Abtriebsrad 32 mit der Scheibe 28 gedreht, so dass der Zapfen 26 radial bewegt und das Gehäuse 14 verschwenkt wird.

Neben der Scheibe 28 ist ein an einem flexiblen Arm angeordneter Rasthaken 41A angeordnet, der an dem Umfangsrand der Scheibe 28 anliegt. Der Rasthaken 41A ist über den Arm mit dem Getriebegehäuse 36 verbunden. Die Scheibe 28 weist am Umfang in regelmäßigen Abständen Rasteinkerbungen 41 B auf. Die Rasteinkerbungen 41 B lassen den Rasthaken 41A einrasten. Beispielsweise entspricht eine Drehung des Abtriebsrades 32 und somit der Scheibe 28 von einer Rasteinkerbung 41 B zur nächsten jeweils einem Verschwenken des Gehäuses um 0,5°. Somit wird durch die von dem Rasthaken 41A und den Rasteinkerbungen 41 B gebildete Rasteinrichtung eine spürbare Rastung des Winkelgetriebes bei regelmäßig, um 0,5°, winkelbeabstandeten Winkelausrichtungen des Gehäuses bewirkt. Die am Abtriebsrad angeordnete Rasteinrichtung ermöglicht ein "blindes" Justieren. Eine solche Rasteinrichtung kann auch am Antriebsrad oder an anderer Stelle des Winkelgetriebes angeordnet sein.

Wie im folgenden beschrieben wird, ist das Getriebegehäuse 36 dazu eingerichtet, eine Montage des Antriebsrades 34 an unterschiedlichen Seiten des Winkelgetriebes 24 zu gestatten.

Das Getriebegehäuse 36 hat einen ersten Gehäuseteil 36A und einen zweiten Gehäuseteil 36B. Der erste Gehäuseteil 36A ist mit dem Halter 18 fest verbunden und bildet ein Lager für das Abtriebsrad 32. Der zweite Gehäuseteil 36B bildet eine Kappe des Getriebegehäuses und ist auf den ersten Gehäuseteil 36A aufsetzbar. Er ist dann über den ersten Gehäuseteil 36A mit dem Halter 18 verbunden.

Fig. 3 zeigt schematisch das Antriebsrad 34 und die ersten und zweiten Gehäuseteile 36A, 36B vor der Montage. Beispielsweise kann ein Bausatz für die Sensorhalterung 10 den zweiten Gehäuseteil 36B losgelöst von dem ersten Gehäuseteil 36A oder lösbar verbunden mit diesem umfassen. Der zweite Gehäuseteil 36B ist beispielsweise mittels Befestigungseinrichtungen 42, 44 in Form von Rasteinrichtungen an dem ersten Gehäuseteil 36A montierbar. Fig. 3 zeigt schematisch Rastnasen 42 und entsprechende, mit diesen zusammenwirkende Eingriffkonturen 44. Beispielsweise ist der zweite Gehäuseteil 36B an dem ersten Gehäuseteil 36A anclipsbar.

In der in Fig. 1 gezeigten, montierten Stellung ist der zweite Gehäuseteil 36B lösbar mittels der Befestigungseinrichtungen 42, 44 mit dem ersten Gehäuseteil 36A verbunden. Dabei ist das Antriebsrad 34 zwischen den ersten und zweiten Gehäuseteilen 36A, 36B angeordnet. Der erste Gehäuseteil 36A weist an vier um 90° winkelversetzten Positionen Aufnahmen 46 zur Lagerung des Antriebsrades 34 an vier verschiedenen Seiten des Getriebegehäuses auf. Das Antriebsrad 34 ist dadurch an den entsprechenden, um 90° winkelversetzten Positionen am Umfang des Abtriebsrades 32 montierbar. In Fig. 1 ist das Abtriebsrad 34 an einer linken Seite montiert, alternative Montagepositionen sind gestrichelt angedeutet.

Der zweite Gehäuseteil 36B weist im beschriebenen Beispiel lediglich eine einzige Aufnahme 48 zur Lagerung des Antriebsrades 34 auf. Die Aufnahmen 46, 48 bilden beispielsweise jeweils eine halbe Lagerschale für einen Achszapfen des Antriebsrades 34. An den übrigen Seiten ist der zweite Gehäuseteil 36B mit Zungen 50 versehen, die bei der Montage am ersten Gehäuseteil 36A die nicht benötigten Aufnahmen 46 verschließen. Je nach gewünschter Position des Antriebsrades 34 wird der zweite Gehäuseteil 36B in einer entsprechend ausgerichteten Stellung am ersten Gehäuseteil 36A montiert. Somit ist das Getriebegehäuse 36 dazu eingerichtet, eine Montage des zweiten Gehäuseteils 36B mit an unterschiedlichen Seiten des Winkelgetriebes 24 positionierter Aufnahme 48 zu gestatten. Indem das Winkelgetriebe entsprechend montiert wird, kann die Sensorhalterung beispielsweise zur Justierung von links, von rechts, von vorne oder von hinten konfiguriert werden.

Darüber hinaus ist ein Achszapfen 52 des Abtriebsrades 32 mit einer Eingriffskontur 54 zur unmittelbaren Drehmomentübertragung auf das Abtriebsrad 32 verbunden. Der zweite Gehäuseteil 36B weist eine Öffnung 56 auf, an der der Achszapfen 52 hindurchgeführt ist, so dass die Eingriffskontur 54 frei liegt. In der in Fig. 1 gezeigten Position wird somit zusätzlich eine Justierung von unten ermöglicht, indem ein Drehmoment über die Eingriffskontur 54 direkt auf das Abtriebsrad 32 übertragen wird.

Bei dem beschriebenen Justagekonzept ist somit eine Justierung des Sensors 12 von verschiedenen Seiten möglich, ohne das konstruktive Änderungen notwendig sind. Vielmehr kann mit den gleichen Komponenten bei der Montage der Sensorhalterung festgelegt werden, auf welcher Seite die Eingriffskontur zur Drehmomentübertragung zugänglich sein soll. Durch die Selbsthemmung und Untersetzung von Justiereinrichtung und Winkelgetriebe ergibt sich eine gute Justierbarkeit.

## Patentansprüche

1. Sensorhalterung (10) für einen Sensor (12) zur Objektdetektion, mit einem Gehäuse (14) für den Sensor (12), einem Halter (18), an dem das Gehäuse (14) verschwenkbar gehalten ist, einer Justiereinrichtung (22) für eine Winkelausrichtung des Gehäuses (14) und einem Winkelgetriebe (24) zum Steuern der Justiereinrichtung (22),
wobei das Winkelgetriebe (24) ein Antriebsrad (34) und ein Abtriebsrad (32) aufweist, wobei das Antriebsrad (34) mit einer Eingriffskontur (40) zur Drehmomentübertragung auf das Antriebsrad (34) verbunden ist,
**dadurch gekennzeichnet, dass** ein Getriebegehäuse (36) des Winkelgetriebes (24) dazu eingerichtet ist, eine Montage des Antriebsrades (34) an unterschiedlichen Seiten des Winkelgetriebes (24) zu gestatten.

2. Sensorhalterung nach Anspruch 1, bei der das Antriebsrad (34) an mehreren, winkelversetzten Positionen am Umfang des Abtriebsrades (32) montierbar ist.

3. Sensorhalterung nach Anspruch 1 oder 2, bei der das Getriebegehäuse (36) einen ersten Gehäuseteil (36A) und einen zweiten Gehäuseteil (36B) aufweist und bei der das Antriebsrad (34) zwischen dem ersten Gehäuseteil (36A) und dem zweiten Gehäuseteil (36B) angeordnet ist.

4. Sensorhalterung nach Anspruch 3, bei der der zweite Gehäuseteil (36B) eine Aufnahme (48) zur Lagerung des Antriebsrades (34) aufweist und das Getriebegehäuse (36) dazu eingerichtet ist, eine Montage des zweiten Gehäuseteils (36B) mit an unterschiedlichen Seiten des Winkelgetriebes (24) positionierter Aufnahme (48) zu gestatten.

5. Sensorhalterung nach einem der vorstehenden Ansprüche, bei der das Antriebsrad (34) und das Abtriebsrad (32) Zahnräder sind.

6. Sensorhalterung nach einem der vorstehenden Ansprüche, bei der das Winkelgetriebe (24) ein Kegelradgetriebe ist.

7. Sensorhalterung nach einem der vorstehenden Ansprüche, bei der das Abtriebsrad (32) mit einer Eingriffskontur (54) zur Drehmomentübertragung auf das Abtriebsrad (32) verbunden ist.

8. Sensorhalterung nach einem der vorstehenden Ansprüche, bei der die Justiereinrichtung (22) eine drehbare, durch das Winkelgetriebe (24) steuerbare Scheibe (28) mit spiralförmig verlaufender Führungskulisse (30) aufweist, in die ein radial bewegbarer Zapfen (26) eingreift.

9. Sensorhalterung nach einem der vorstehenden Ansprüche, bei der das Winkelgetriebe (24) eine Rasteinrichtung (41A, 41B) aufweist, die dazu eingerichtet ist, bei unterschiedlichen, regelmäßig winkelbeabstandeten Winkelausrichtungen des Gehäuses (14) eine Rastung des Winkelgetriebes (24) zu bewirken.

10. Sensoreinheit mit einer Sensorhalterung nach einem der Ansprüche 1 bis 9 und mit einem in dem Gehäuse (14) angeordneten Sensor (12) zur Objektdetektion, insbesondere einem Radarsensor.

11. Bausatz für eine Sensorhalterung nach einem der Ansprüche 1 bis 9, wobei das Antriebsrad (34) an unterschiedlichen Seiten des Winkelgetriebes (24) montierbar ist.

## Claims

1. Sensor mount (10) for a sensor (12) for object detection, having a housing (14) for the sensor (12), a holder (18) on which the housing (14) is held in a pivotable manner, an adjusting device (22) for angular orientation of the housing (14), and an angular gear mechanism (24) for controlling the adjusting device (22),
wherein the angular gear mechanism (24) has a drive wheel (34) and an output drive wheel (32), wherein the drive wheel (34) is connected to an engagement contour (40) for transmitting torque to the drive wheel (34),
**characterized in that** a gear mechanism housing (36) of the angular gear mechanism (24) is designed to permit mounting of the drive wheel (34) on different sides of the angular gear mechanism (24).

2. Sensor mount according to Claim 1, in which the drive wheel (34) can be mounted in several, angularly offset positions over the circumference of the output drive wheel (32).

3. Sensor mount according to Claim 1 or 2, in which the gear mechanism housing (36) has a first housing part (36A) and a second housing part (36B), and in which the drive wheel (34) is arranged between the first housing part (36A) and the second housing part (36B).

4. Sensor mount according to Claim 3, in which the second housing part (36B) has a receptacle (48) for bearing the drive wheel (34), and the gear mechanism housing (36) is designed to allow mounting of the second housing part (36B) with a receptacle (48) which is positioned on different sides of the angular gear mechanism (24).

5. Sensor mount according to one of the preceding claims, in which the drive wheel (34) and the output drive wheel (32) are gear wheels.

6. Sensor mount according to one of the preceding claims, in which the angular gear mechanism (24) is a conical gear mechanism.

7. Sensor mount according to one of the preceding claims, in which the output drive wheel (32) is connected to an engagement contour (54) for transmitting torque to the output drive wheel (32).

8. Sensor mount according to one of the preceding claims, in which the adjusting device (22) has a rotatable disc (28) which can be controlled by the angular gear mechanism (24) and has a guide slot (30) which runs in a spiral manner and into which a radially movable pin (26) engages.

9. Sensor mount according to one of the preceding claims, in which the angular gear mechanism (24) has a latching device (41A, 41B) which is designed to effect latching of the angular gear mechanism (24) at different angular orientations of the housing (14) which are at regular angular intervals.

10. Sensor unit having a sensor mount according to one of Claims 1 to 9 and having a sensor (12), which is arranged in the housing (14), for object detection, in particular a radar sensor.

11. Construction kit for a sensor mount according to one of Claims 1 to 9, wherein the drive wheel (34) can be mounted on different sides of the angular gear mechanism (24).

## Revendications

1. Support de capteur (10) destiné à un capteur (12) destiné à détecter des objets, comportant un boîtier (14) destiné au capteur (12), un support (18) sur lequel le boîtier (14) est maintenu de manière pivotante, un dispositif d'ajustage (22) pour une orientation angulaire du boîtier (14) et un engrenage angulaire (24) destiné à commander le dispositif d'ajustage (22),
dans lequel l'engrenage angulaire (24) comporte une roue d'entraînement (34) et une roue entraînée (32), dans lequel la roue d'entraînement (34) est reliée à un contour d'engrènement (40) afin de transmettre un couple à la roue d'entraînement (34),
**caractérisé en ce qu'**un boîtier d'engrenage (36) de l'engrenage angulaire (24) est conçu pour permettre un montage de la roue d'entraînement (34) sur des côtés différents de l'engrenage angulaire (24).

2. Support de capteur selon la revendication 1, dans lequel la roue d'entraînement (34) peut être montée en plusieurs positions angulairement décalées sur la périphérie de la roue entraînée (32).

3. Support de capteur selon la revendication 1 ou 2, dans lequel le boîtier d'engrenage (36) comporte une première partie de boîtier (36A) et une seconde partie de boîtier (36B) et dans lequel la roue d'entraînement (34) est disposée entre la première partie de boîtier (36A) et la seconde partie de boîtier (36B).

4. Support de capteur selon la revendication 3, dans lequel la seconde partie de boîtier (36B) comporte un réceptacle (48) pour le rangement de la roue d'entraînement (34) et dans lequel le boîtier d'engrenage (36) est conçu pour permettre un montage de la seconde partie de boîtier (36B) avec le réceptacle (48) positionné sur des côtés différents de l'engrenage angulaire (24).

5. Support de capteur selon l'une quelconque des revendications précédentes, dans lequel la roue d'entraînement (34) et la roue entraînée (32) sont des roues dentées.

6. Support de capteur selon l'une quelconque des revendications précédentes, dans lequel l'engrenage angulaire (24) est un engrenage à pignons coniques.

7. Support de capteur selon l'une quelconque des revendications précédentes, dans lequel la roue entraînée (32) est reliée au contour d'engrènement (54) pour la transmission d'un couple à la roue entraînée (32).

8. Support de capteur selon l'une quelconque des revendications précédentes, dans lequel le dispositif d'ajustage (22) comporte un disque tournant (28) pouvant être commandé par l'engrenage angulaire (24), muni de coulisses de guidage (30) s'étendant en spirale dans lesquelles s'engage une broche (26) mobile radialement.

9. Support de capteur selon l'une quelconque des revendications précédentes, dans lequel l'engrenage angulaire (24) comporte un dispositif de d'encliquetage (41A, 41B) qui est conçu pour provoquer un encliquetage de l'engrenage angulaire (24) dans des orientations angulaires du boîtier (14) qui sont différentes et régulièrement espacées angulairement.

10. Unité à capteur comportant un support de capteur selon l'une quelconque des revendications 1 à 9 et comportant un capteur (12) disposé dans le boîtier (14) à des fins de détection d'objets, notamment un capteur radar.

11. Kit destiné à un support de capteur selon l'une quelconque des revendications 1 à 9, dans lequel la roue d'entraînement (34) peut être montée sur des côtés différents de l'engrenage angulaire (24).
